# EUROPEAN PATENT APPLICATION

(11) **EP 4 624 267 A1**
(43) Date of publication of application: **01.10.2025**
(21) Application number: 25157435.6
(22) Date of filing: 12.02.2025
(51) Int. Cl.: B60R 16/03, B60R 16/033, B60K 1/00, B60K 6/00, B60L 1/00, B60K 6/40, B60L 15/00

(54) **VEHICLE AND VEHICLE POWERTRAIN STRUCTURE**

(30) Priority: 28.03.2024 JP 2024054353
(71) Applicant: MAZDA MOTOR CORPORATION, Hiroshima 730-8670 (JP)
(72) Inventor: Sugimoto, Manabu, Aki-gun, Hiroshima, 730-8670 (JP)
(74) Representative: Thoma, Michael

(57) **Abstract**

[Problem] To provide a vehicle powertrain structure capable of establishing an EMC measure and ensuring safety during a vehicle collision at the same time.

[Solution] A vehicle includes a drive system, a battery, and an inverter 100. The drive system includes a motor for vehicle travel and a motor housing 510 made of a conductive material. The battery is a power source of the motor. The inverter 100 has a circuit section and an inverter housing 101. The inverter housing 101 is tightly joined to the motor housing 510. The motor housing 510 has a DC connector CN8 that is disposed in a rear wall portion, and has a DC bus bar LN4 and a ferrite core 513 accommodated in a housing inner space 510a. The DC bus bar LN4 connects the circuit section of the inverter 100 and the DC connector CN8. The ferrite core 513 is a noise filter component that is inserted in the DC bus bar LN4.

## Description

### [Technical Field]

The present invention relates to a vehicle and a vehicle powertrain structure and, in particular, to a powertrain structure that includes a travel motor and a power converter.

### [Background Art]

In recent years, vehicles that include a motor as a drive source for travel have been increasing. In such vehicles, a battery for supplying electric power to the motor and a power converter that transforms the electric power between the battery and the motor are mounted.

A controller that controls the two motors is disclosed in Patent Literature 1. The controller that is disclosed in Patent Literature 1 includes an inverter circuit and a booster circuit. A reactor included in the booster circuit is arranged in a case that accommodates the motor. In this way, a portion of the controller accommodating the inverter circuit and components of the booster circuit other than the reactor is downsized. That is, the relatively large reactor is arranged not in a cover member for accommodating the inverter circuit and the like but in the case for accommodating the motor. In this way, the controller disclosed in Patent Literature 1 is downsized as a whole.

An inverter that transforms the electric power between the motor as the drive source for vehicle travel and the battery is disclosed in Patent Literature 2. In the inverter disclosed in Patent Literature 2, all circuit components that constitute the inverter are accommodated in a case for accommodating a transmission mechanism. In Patent Literature 2, since all of the circuit components of the inverter are accommodated not in an inverter case but in the case for the transmission mechanism, the number of the components can be reduced.

### [Citation List]

### [Patent Literature]

[Patent Literature 1] JP2012-65436A
[Patent Literature 2] Japanese Patent No. 6,070,444

### [Summary of Invention]

### [Technical Problem]

However, in the related art that includes the techniques disclosed in Patent Literature 1, 2, it is considered to be difficult to establish an Electro Magnetic Compatibility (EMC) measure and ensure safety during a vehicle collision at the same time. More specifically, a DC wire that connects the controller and the battery is not disclosed in Patent Literature 1. Thus, depending on an arrangement configuration of the DC wire, the DC wire is possibly damaged during the vehicle collision, which possibly causes a problem from a viewpoint of ensuring the safety.

In the inverter disclosed in Patent Literature 2, a power supply connector is provided to a lid body that closes an upper opening of the case, and the DC wire that connects the power converter and the battery via the power supply connector is arranged. That is, in the configuration disclosed in Patent Literature 2, it is considered that the DC wire is damaged during the vehicle collision depending on the arrangement configuration of the DC wire. Furthermore, a configuration that a noise filter component is interposed in the DC wire is not disclosed in Patent Literature 2. Moreover, due to a place where the battery is placed, a length of the DC wire is frequently increased on the outside of the case. For these reasons, it is concerned that problems caused by an influence of electromagnetic waves on other devices and an influence of the electromagnetic waves from other devices occur to the inverter disclosed in Patent Literature 2.

The invention has been made to solve the problem as described above and therefore has a purpose of providing a vehicle and a vehicle powertrain structure capable of establishing an EMC measure and ensuring safety during a vehicle collision at the same time.

### [Solution to Problem]

A vehicle powertrain structure according to the present invention includes: a drive system that has a motor as a drive source for travel of a vehicle and a drive system housing formed by using a conductive material and at least accommodating the motor; a battery as a power source of the motor; and a power converter that has a circuit section interposed between the motor and the battery and converting power between the motor and the battery and a converter housing formed by using a conductive and/or electromagnetic shielding material suppressing electromagnetic noise and accommodating the circuit section. In the vehicle powertrain structure according to this aspect, the converter housing is closely joined to the drive system housing or integrally provided with the drive system housing, and, in the drive system housing, a DC connector, to which a wire extending from the battery is connected, is disposed in a wall portion, and a DC wire for connecting the circuit section of the power converter and the DC connector and a noise filter component inserted in the DC wire are accommodated. When the converter housing is integrally provided with the drive system housing, they may be made of one piece and may be homogeneous in material.

In the vehicle powertrain structure according to the above aspect has the noise filter component inserted in the DC wire. Accordingly, noise generated in the power converter is prevented from being leaked to the wire on the DC connector side from the noise filter component in the DC wire and on the battery side from the DC connector (an EMI measure). In addition, even in the case where the noise from another device is transmitted to the wire from the battery to the DC connector, interference of the noise with driving of the power converter is prevented (an EMS measure).

In the vehicle powertrain structure according to the above aspect, the DC wire is accommodated in the drive system housing formed of the conductive material. Accordingly, radiation of an electromagnetic wave from the power converter side of the noise filter component in the DC wire to the outside of the housing is prevented, and interference of the electromagnetic wave with the DC wire from the outside of the housing is also prevented. Thus, in the vehicle powertrain structure according to the above aspect, an EMC measure is established.

In the vehicle powertrain structure according to the above aspect, the noise filter component is not accommodated in the converter housing but is accommodated in the drive system housing that is closely joined or integrally formed with the converter housing. Accordingly, in the vehicle powertrain structure according to the above aspect, it is possible to downsize the converter housing by a space corresponding to the noise filter component, and it is thus possible to suppress a collision of the converter housing with a portion therearound during the vehicle collision.

Since the DC wire may be accommodated in the drive system housing having relatively high rigidity, it is possible to suppress damage to the DC wire during the vehicle collision. Accordingly, the DC wire can be protected at least until power supply is interrupted even during the vehicle collision. Thus, it is possible to ensure high safety.

In the above description, "closely joined" indicates that, even in the case where a minute clearance is provided in the joined portion between the drive system housing and the converter housing, the electromagnetic wave does not enter/exit through the clearance. In addition, "power conversion" executed by the circuit section of the power converter indicates conversion between the DC power and the AC power, conversion to increase or reduce a voltage, or the like.

In the vehicle powertrain structure according to the above aspect, the converter housing may be placed on at least a part of an upper portion of the drive system housing, and may be formed in a tapered shape in a plan view from above such that a width of a rear end portion is reduced from an outer side to an inner side in a vehicle width direction from a front side toward a rear side. In other words a rear wall portion of the converter housing may extend further rearwards at an inner section of the converter housing than at an outer section.

Since the rear end portion of the converter housing is formed in the tapered shape as described above, the collision of the converter housing with a peripheral portion is suppressed even during the vehicle collision. That is, during the vehicle collision (in particular, during an offset collision), there is a case where the converter housing rotate together with the driver system housing in the plan view. In such a case, in the case where the rear end portion of the converter housing is not tapered as described above, there is a high risk that a corner portion of the rear end portion collides with a peripheral member (a framework member, an auxiliary machine, or the like), and thus there is a concern that the power converter is damaged.

Meanwhile, since the rear end portion of the converter housing may have the tapered shape as described above, it is possible to reduce the risk that the rear end portion of the converter housing collides with the peripheral member (such as a member disposed behind the power converter) even during the vehicle collision such as an offset collision. Thus, the vehicle powertrain structure according to the above aspect is advantageous to ensure the high safety during the vehicle collision.

In the plan view from above, a DC input/output unit, which is a connection portion of the power converter with the DC wire, and the noise filter component may be disposed in an overlapping positional relationship.

Since the DC input/output unit in the power converter and the noise filter component accommodated in the drive system housing may be provided to overlap each other in the plan view from above, the converter housing is prevented from protruding from a contour of the drive system housing in the plan view while the rear end portion of the converter housing has the tapered shape as described above. Accordingly, in the vehicle powertrain structure according to the above aspect, it is possible to suppress the power conversion housing from colliding with the peripheral member before the collision of the drive system housing during the vehicle collision, and it is thus further advantageous to ensure the high safety during the vehicle collision.

A power line for supplying DC power to an auxiliary machine may be accommodated in the drive system housing, and, in the drive system housing, a branch portion in which the power line is branched on the DC connector side from a position at which the noise filter component is inserted in the DC wire may be provided.

The branch portion may be provided at the above-described position in the DC wire, and the power line is branched in the branch portion. Accordingly, the noise generated in the power converter is prevented from being transmitted through the power line. In addition, since the power line is also accommodated in the drive system housing, the electromagnetic wave from the outside of the housing is also prevented from being transmitted through the power line. Thus, the vehicle powertrain structure according to the above aspect is advantageous to take the further reliable EMC measure.

The drive system housing may accommodate an AC wire that connects the circuit section of the power converter and the motor, a drive-system-side DC connector and a drive-system-side AC connector may be disposed in the wall portion of the drive system housing, the drive-system-side DC connector being a connection portion of the DC wire with the circuit section, and the drive-system-side AC connector being a connection portion of the AC wire with the circuit section, a converter-side DC connector and a converter-side AC connector may be disposed in a wall portion of the converter housing, the converter-side DC connector being a connection portion of the circuit section with the DC wire, and the converter-side AC connector being a connection portion of the circuit section with the AC wire, and the drive-system-side DC connector and the converter-side DC connector may be joined and the drive-system-side AC connector and the converter-side AC connector may be joined by slidingly moving the power converter relative to the drive system.

The converter-side DC connector and the drive-system-side DC connector, and the converter-side AC connector and the drive-system-side AC connector are configured to be coupled to each other by slidingly moving the drive system and the power converter. Thus, the power converter and the drive system can easily be attached/detached at the time of manufacturing or maintaining the power unit.

When the DC wire is seen in a direction intersecting both an up-down direction and a direction of the sliding movement, the DC wire may be routed to meander in the direction of the sliding movement.

The DC wire may be routed to meander when seen in the intersecting direction. Accordingly, compared to a case where the DC wire is routed linearly in an up-down direction from the power converter to the DC connector, it is possible to suppress a vertical dimension of a region where the DC wire is accommodated in the drive system. Thus, the vehicle powertrain structure according to the above aspect is advantageous to reduce the size of the entire powertrain in the up-down direction.

The drive system may further have a transmission that is coupled to an output shaft of the motor, the drive system housing is configured to also accommodate the transmission, and the converter housing may be fixed to a portion of the drive system housing, in which the transmission is accommodated, via a bracket.

The converter housing may be fixed to the portion of the drive system housing, in which the transmission is accommodated, via the bracket. Accordingly, the converter housing and the drive system housing are further firmly joined to each other not only by joining the connectors due to the sliding movement but also by fixing the housings via the bracket. Thus, it is possible to avoid occurrence of a situation where the drive system housing and the converter housing are separated from each other due to vibration during the vehicle travel, impact during the vehicle collision, or the like.

The drive system and the power converter may be mounted in the powertrain room provided in the front portion of the vehicle, the battery may be mounted in a portion of the vehicle on a rear side of the powertrain room, and the DC connector may be disposed in the wall portion on a rear side of the drive system housing.

The drive system and the power converter may be mounted in the powertrain room provided in the front portion of the vehicle, and the DC connector is disposed in the rear wall portion of the drive system housing. Accordingly, even during the frontal collision of the vehicle, it is possible to suppress the DC connector from being damaged by an obstacle that enters the powertrain room, the member of the vehicle that is pushed by the obstacle and moves rearward, or the like. Therefore, the vehicle powertrain structure according to the above aspect is further advantageous to ensure the high safety during the vehicle collision.

### [Advantageous Effects of Invention]

In the vehicle powertrain structure according to each of the above aspects, it is possible to establish the EMC measure and ensure the safety during the vehicle collision at the same time.

### [Brief Description of Drawings]

[FIG. 1] FIG. 1 is a view illustrating a schematic configuration of a vehicle on which a powertrain according to an embodiment is mounted.
[FIG. 2] FIG. 2 is a front view in which the powertrain is seen from the front.
[FIG. 3] FIG. 3 is a plan view in which a part of the powertrain is seen from above.
[FIG. 4] FIG. 4 includes views illustrating a configuration of an inverter, in which FIG. 4A is a plan view and FIG. 4B is a right side view.
[FIG. 5] FIG. 5 is a plan view illustrating a connector and a wire that are included in a motor housing.
[FIG. 6] FIG. 6 includes views illustrating a configuration between DC connectors in the motor housing, in which FIG. 6A is a front view and FIG. 6B is a right side view.
[FIG. 7] FIG. 7 is a right side view illustrating a routing configuration of power lines in a space inside a housing.
[FIG. 8] FIG. 8 is a view in which section A in FIG. 7 is seen from a left side of the vehicle.
[FIG. 9] FIG. 9 includes views illustrating a posture change of the inverter during an offset collision, in which FIG. 9A is a view before the collision and FIG. 9B is a view after the collision.

### [Description of Embodiments]

A description will hereinafter be made on an embodiment of the invention with reference to the drawings. The invention is exemplarily described in an embodiment described below.

In the drawings used in the following description, "FR" indicates a vehicle front direction, "RR" indicates a vehicle rear direction, "LH" indicates a vehicle left direction, "RH" indicates a vehicle right direction, "UP" indicates a vehicle up direction, and "LO" indicates a vehicle down direction.

### 1. Configuration of Vehicle V

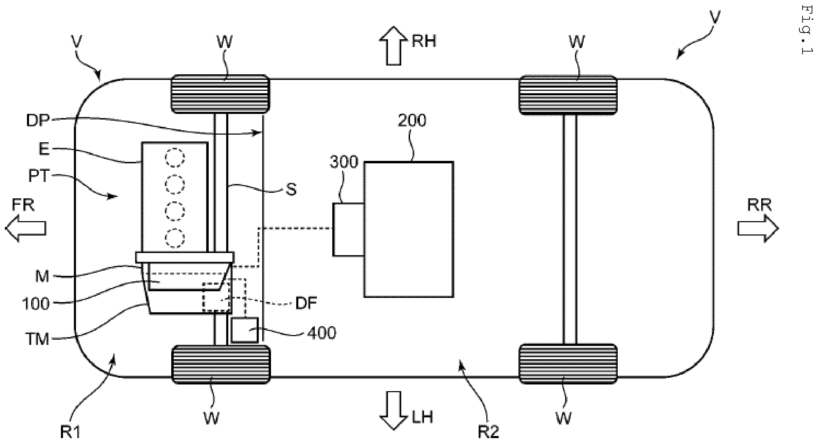

A description will be made on a configuration of a vehicle V according to an embodiment of the invention with reference to FIG. 1.

As illustrated in FIG. 1, in the vehicle V, a powertrain PT that includes an inverter (power converter) 100 is mounted in a front powertrain room R1.

The vehicle V is a so-called hybrid electric vehicle (HEV). An engine E and a motor M as drive sources for travel (that is, drive sources for wheels W) are mounted on the vehicle V. The powertrain PT includes a transmission TM in addition to the engine E and the motor M.

The motor M may be a three-phase three-wire AC motor that is rotated when being supplied with three-phase AC power, and may include: output shaft; a rotor that has a permanent magnet disposed around the output shaft; and a stator that is disposed on an outer periphery of the rotor and in which a coil is wound around each of plural teeth. The plural coils include a U-phase coil, a V-phase coil, and a W-phase coil, and a current of a mutually different phase is supplied to the coil of the respective phase.

The transmission TM is connected to the motor M and decelerates the rotation that is input from the motor M. The transmission TM is integrated with a differential gear DF. Thus, the rotation that is input to the transmission TM is output to a driveshaft S via the differential gear DF and is transmitted to the wheels W.

The vehicle V according to an embodiment may be a parallel hybrid electric vehicle as an example, and can travel by a driving force of only the motor M, travel by driving forces of both the motor M and the engine E, and travel by a driving force of only the engine E. The vehicle V can perform deceleration regeneration, and the motor M generates the electric power by a transmission force from the wheels W during deceleration of the vehicle V.

A battery 200 exchanges the electric power with the motor M. When the motor M is driven as the drive source for travel, the battery 200 supplies the electric power to the motor M. In this case, DC power is supplied via a DC/DC converter 300 that is provided in a power supply path between the battery 200 and the motor M.

Meanwhile, when the motor M is driven as a generator during the deceleration of the vehicle V, the battery 200 stores the electric power that is generated by the motor M.

The inverter 100 is connected to the three-phase three-wire motor M. The inverter 100 is a power converter that converts the DC power from the battery 200 into AC power and supplies the electric power to the motor M. More specifically, the inverter 100 converts the DC power, which is supplied from the battery 200 via a DC circuit including the DC/DC converter 300, into the three-phase AC power and supplies the three-phase AC power to the motor M.

In the case where the motor M is driven as the generator during the deceleration of the vehicle V, the inverter 100 converts the AC power, which is generated by the motor M, into the DC power and supplies the DC power to the battery 200 via the DC circuit including the DC/DC converter 300.

Although not illustrated in FIG. 1, the vehicle V also includes a low-voltage battery for supplying the electric power to an electrical component provided in each portion of the vehicle V. The low-voltage battery is a battery, a nominal voltage of which is lower than that of the battery 200.

Here, the battery 200 is a lithium-ion battery or a nickel-metal hydride battery, a nominal voltage of which is 24 V or higher, for example. The low-voltage battery is a lead battery or a lithium-ion battery, a nominal voltage of which is 12 V or 24 V, for example.

The battery 200 is mounted on a space under a floor of a cabin R2, or the like that is divided backward by a dashboard DP from the powertrain room R1.

In the vehicle V, a powertrain control module (PCM) 400 as a controller that comprehensively controls the powertrain PT including the motor M and the engine E is also mounted.

### 2. Arrangement of Inverter 100

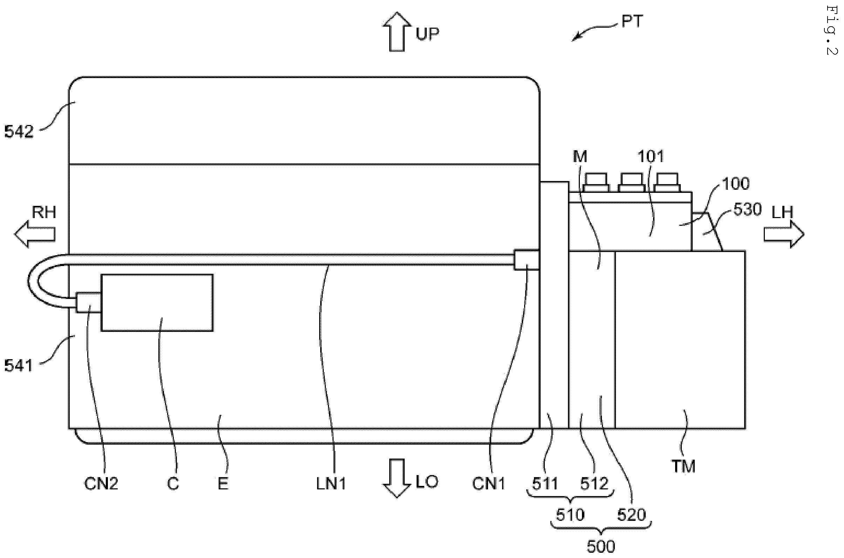

A description will be made on arrangement of the inverter 100 in the powertrain room R1 with reference to FIG. 2. FIG. 2 is a front view in which the powertrain PT including the inverter 100 is seen from the front side of the vehicle V.

As illustrated in FIG. 2, the engine E, the motor M, and the transmission TM are sequentially arranged from right to left in the powertrain room R1. The engine E has an engine lower section 541 and an engine upper portion 542 that is disposed on top of the engine lower portion 541.

The motor M is disposed on a left side of and adjacent to the engine lower portion 541 of the engine E, and has a motor housing 510 that includes a first motor housing 511 and a second motor housing 512 as outer shells. The first motor housing 511 is joined to a left side surface of the engine lower portion 541, and the second motor housing 512 is joined to a left portion of the first motor housing 511 without any clearance therebetween. The first motor housing 511 and the second motor housing 512 are each formed by using a conductive material (for example, a metallic material or a carbon fiber reinforced resin).

The transmission TM has an axle housing 520 as an outer shell. The axle housing 520 is joined (fastened) to the left side of the second motor housing 512 in the motor housing 510 without any clearance therebetween. A transmission mechanism that constitutes the transmission TM is accommodated in the axle housing 520. The axle housing 520 is also formed by using the conductive material (for example, the metallic material or the carbon fiber reinforced resin).

In the powertrain PT, the motor housing 510 and the axle housing 520 are combined to constitute a drive system housing 500.

The inverter 100 is arranged adjacent to the first motor housing 511 in a vehicle width direction of the vehicle V and is arranged in a portion extending from an upper portion of the second motor housing 512 to an upper portion of the axle housing 520. The inverter 100 is connected by joining a connector (not illustrated in FIG. 2) that is formed in the first motor housing 511 to a connector (not illustrated in FIG. 2) of the inverter 100. The connectors are joined to each other by slidingly moving the inverter 100 in the right direction with respect to the drive system housing 500.

In addition, the inverter 100 has an inverter housing (converter housing) 101 that constitutes an outer shell. The inverter housing 101 is fixed to the axle housing (a portion of the drive system housing 500 in which the transmission TM is accommodated) 520 via a bracket 530.

An electric compressor (auxiliary machine) C for an air conditioner is also mounted in the powertrain room R1 (see FIG. 1) of the vehicle V. The electric compressor C is supplied with the DC power from the battery 200 (see FIG. 1) via a power line harness (power line) LN1. The power line harness LN1 is connected to the DC circuit in the drive system housing 500 by a connector CN1 that is connected to one end, and is connected to the electric compressor C by a connector CN2 connected to the other end.

### 3. Structure and Arrangement of Inverter Housing 101

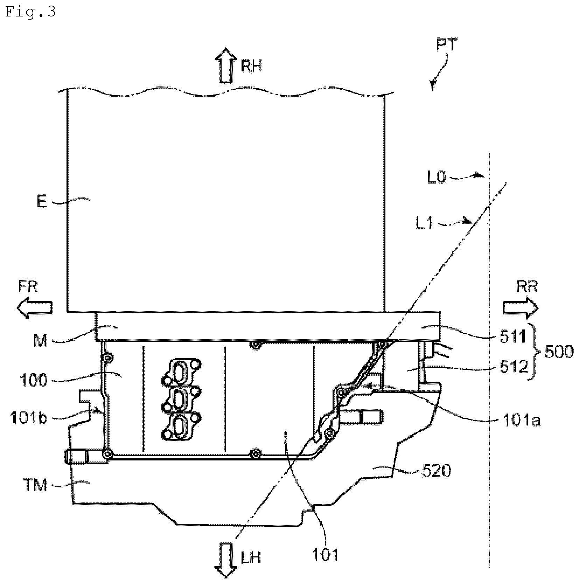

A description will be made on a structure and arrangement of the inverter housing 101 with reference to FIG. 3.

As illustrated in FIG. 3, in the front-rear direction of the vehicle V, a rear end portion 101a of the inverter housing 101 is flush with any of rear end portions of the first motor housing 511, the second motor housing 512, and the axle housing 520, or is arranged in front of any of the rear end portions of the first motor housing 511, the second motor housing 512, and the axle housing 520. More specifically, the rear end portion 101a of the inverter housing 101 is arranged in front of any of the first motor housing 511, the second motor housing 512, and the axle housing 520.

In addition, in the front-rear direction of the vehicle V, a front end portion 101b of the inverter housing 101 is flush with any of front end portions of the first motor housing 511, the second motor housing 512, and the axle housing 520, or is arranged behind any of the front end portions of the first motor housing 511, the second motor housing 512, and the axle housing 520. More specifically, the front end portion 101b of the inverter housing 101 is arranged at a position behind the front end portion of the first motor housing 511 and the front end portion of the axle housing 520. The front end portion 101b of the inverter housing 101 is arranged at a position that is substantially flush with the front end portion of the second motor housing 512.

Furthermore, in a plan view from above, the rear end portion 101a of the inverter housing 101 is formed in a tapered shape such that a width thereof is gradually reduced from the left side (outer side) to the right side (inner side) in the vehicle width direction from the front side toward the rear side. That is, when an imaginary line L1 is drawn along a rear end surface of the rear end portion 101a of the inverter housing 101, the rear end portion 101a of the inverter housing 101 is formed in such a shape that the imaginary line L1 intersects an imaginary line L0 along the vehicle width direction at an angle of less than 90°.

### 4. Detailed Structure of Inverter 100

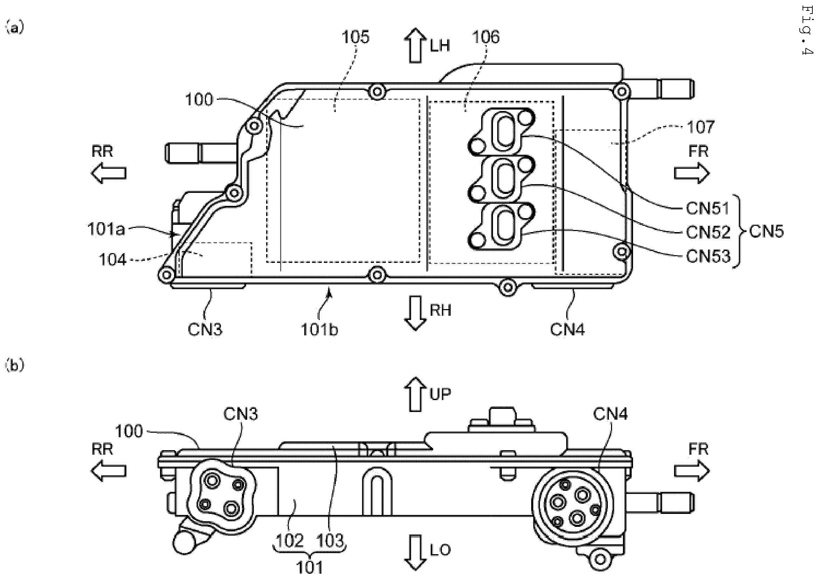

A detailed structure of the inverter 100 will be described with reference to FIG. 4.

As illustrated in FIG. 4B, the inverter housing 101 of the inverter 100 is configured by combining a housing body 102 and a lid 103. The housing body 102 has an opening in an upper portion thereof, and the lid 103 closes the opening of the housing body 102. The housing body 102 and the lid 103 are each formed by using the conductive material (for example, the metallic material or the carbon fiber reinforced resin).

As illustrated in FIGs. 4A and 4B, in a right wall portion of the housing body 102, a DC connector (converter-side DC connector) CN3 is provided in a rear portion, and an AC connector (converter-side AC connector) CN4 is provided in a front portion. The DC connector CN3 is a connector for connecting the inverter 100 and a DC wire on the battery 200 side, and the AC connector CN4 is a connector for connecting the inverter 100 and an AC wire on the motor M side.

In the lid 103, plural (three as an example in an embodiment) PCM connectors CN51 to CN53 (hereinafter, collectively described as PCM connectors CN5) are provided in a manner to protrude upward. These PCM connectors CN5 are connectors for connecting the PCM 400 to the inverter 100.

As illustrated in FIG. 4A, the inverter 100 includes a DC input/output unit 104, a smoothing unit 105, a power module unit 106, and an AC input/output unit 107 that are accommodated in the inverter housing 101. The DC input/output unit 104, the smoothing unit 105, the power module unit 106, and the AC input/output unit 107, which are accommodated in the housing 101, are sequentially disposed from the front side to the rear side in the front-rear direction of the vehicle V. In the inverter 100, the DC input/output unit 104 is accommodated in the rear end portion 101a of the inverter housing 101 that is formed in the tapered shape.

The smoothing unit 105 is configured to include a smoothing capacitor such as a film capacitor or an electrolytic capacitor. An X capacitor may be disposed in the smoothing unit 105.

The power module unit 106 is configured by an insulated gate bipolar transistor (IGBT). Here, the power module unit 106 does not always have to be configured by the IGBT, and may be configured by a known power module such as a metal oxide semiconductor field effect transistor (MOSFET) .

The DC connector CN3 is configured as a part of the DC input/output unit 104, and the AC connector CN4 is configured as a part of the AC input/output unit 107.

Although a detailed description is not made, the inverter housing 101 is also provided with a refrigerant circulation path for cooling the smoothing unit 105 and the power module unit 106.

### 5. Configuration in Motor Housing 510

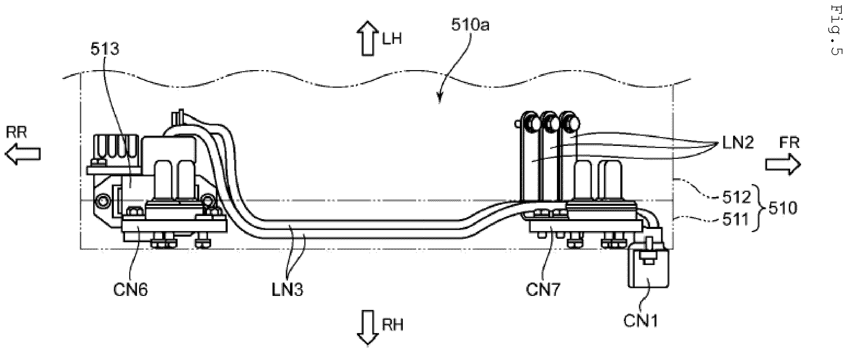

A description will be made on an electric configuration in the motor housing 510 with reference to FIG. 5 to FIG. 8.

As illustrated in FIG. 5, a DC connector (drive-system-side DC connector) CN6 and an AC connector (drive-system-side AC connector) CN7 are provided in a left wall portion of the first motor housing 511. The DC connector CN6 is a connector that is joined to the DC connector CN3 (see FIG. 4) of the inverter 100, and is provided in the rear portion. The AC connector CN7 is a connector that is joined to the AC connector (see FIG. 4) of the inverter 100, and is provided in the front portion.

As described above, the DC connector CN3 and the DC connector CN6 are joined to each other, and the AC connector CN4 and the AC connector CN7 are joined to each other at the same time by horizontally and slidingly moving the inverter housing 101 of the inverter 100 toward the first motor housing 511.

As illustrated in FIG. 5 to FIG. 7, a housing inner space 510a of the motor housing 510 accommodates two DC bus bars (DC wire) LN4, a ferrite core (noise filter component) 513, three AC bus bars (AC wire) LN2, a power line LN3.

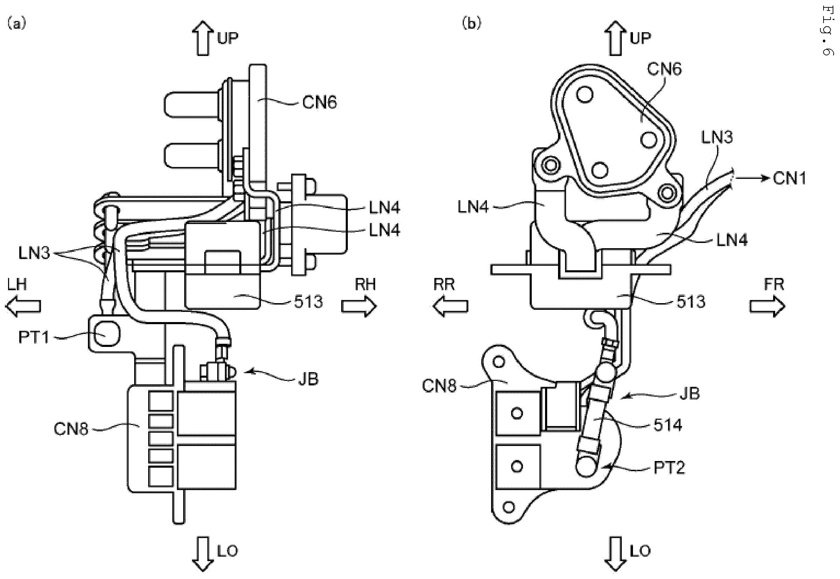

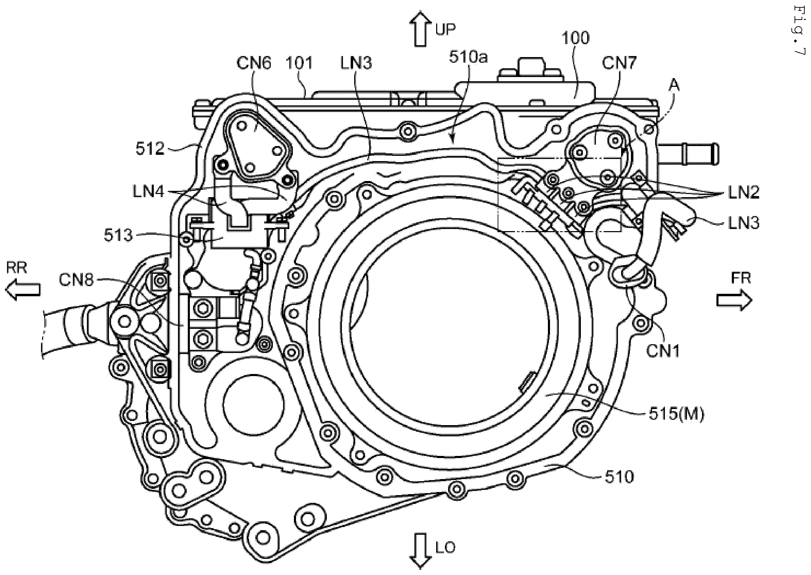

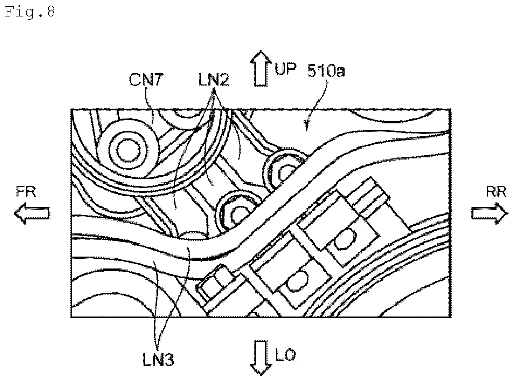

As illustrated in FIG. 6 and FIG. 7, the two DC bus bars LN4 connect between the DC connector CN6 and a DC connector CN8. In addition, as illustrated in FIG. 7 and FIG. 8, the three AC bus bars LN2 connect the AC connector CN7 and a coil of a stator 515 of the motor M.

As illustrated in FIGs. 6A and 6B, the ferrite core 513 is interposed in intermediate portions in a longitudinal direction of the DC bus bars LN4. More specifically, the DC bus bars LN4 are each routed such that the intermediate portion in the longitudinal direction is inserted through a hole of the ferrite core 513. The ferrite core 513 is provided as a measure against noise (EMC measure) in the powertrain PT including the inverter 100.

As illustrated in FIG. 5 and FIG. 7, the power line LN3 connects the DC bus bar LN4 and the connector CN1. As illustrated in FIG. 6A and FIG. 6B, the power line LN3 is branched at a position on the DC connector CN8 side from the portions (PT1, PT2) of the DC bus bars LN4 inserted through the ferrite core 513. That is, the power line LN3 is branched in the junction box (branch portion) JB on the DC connector CN8 side from the portions of the DC bus bars LN4 inserted through the ferrite core 513. Then, the power line LN3 is routed to extend forward in the housing space 510a. The power line LN3 and the connector CN1 are connected in a front portion of the housing inner space 510a. A fuse 514 is interposed between one wire of the power line LN3 and one bus bar of the DC bus bar LN3.

Here, in an embodiment, the power line LN3 is formed of covered electric wires. Thus, as illustrated in FIG. 7 and FIG. 8, the power line LN3 does not cause a short circuit or the like in a portion intersecting the AC bus bar LN2.

As illustrated in FIG. 6A, each of the DC bus bars LN4 is routed to meander in the vehicle width direction in the housing inner space 510a. More specifically, each of the DC bus bars LN4 is arranged to meander between a portion below the DC connector CN6 and a portion on the left side thereof.

As illustrated in FIG. 6A and FIG. 6B, the ferrite core 513 is arranged below the DC connector CN6. Accordingly, in the plan view from above, in a state where the DC connector CN3 of the inverter 100 is joined to the DC connector CN6, the ferrite core 513 is arranged to form an overlapping positional relationship with the DC input/output unit 104 (see FIG. 4A) of the inverter 100.

### 6. Behavior of Power Unit PT During Vehicle Collision

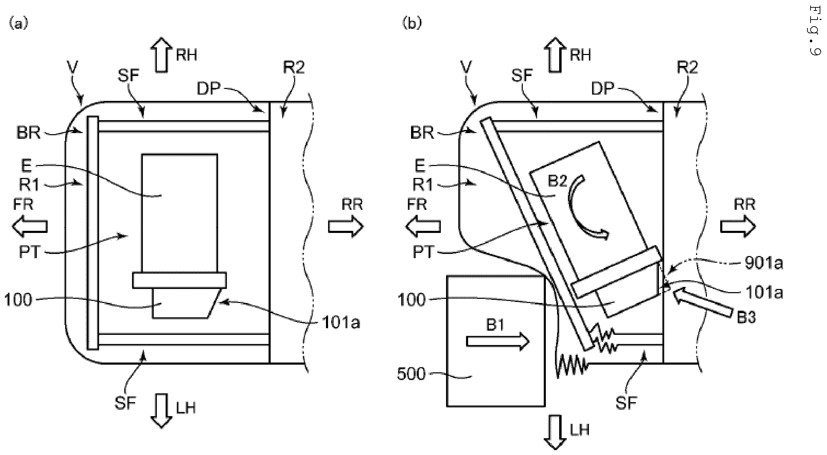

A description will be made on behavior of the power unit PT during a vehicle collision with reference to FIG. 9A and FIG. 9B. A description will hereinafter be made on a case of an offset collision against a front left side of the vehicle V.

As illustrated in FIG. 9A, in the vehicle V according to an embodiment, the powertrain PT is mounted in the powertrain room R1 that is provided in the front portion. In FIG. 9A and FIG. 9B, only the engine E and the inverter 100 of the powertrain PT are illustrated.

In the vehicle V according to an embodiment, the inverter 100 is arranged on the left side of the engine E in the powertrain room R1. Then, the inverter 100 is arranged such that the rear end portion 101a of the inverter housing 101 is located on the vehicle rear side.

Around the powertrain PT, which is mounted in the powertrain room R1, a bumper reinforcement BR is disposed on the front side, and a front side frame SF is disposed on each lateral side. The bumper reinforcement BR is disposed to extend in the vehicle width direction, and the front side frame SF is arranged such that a front end thereof is coupled to the bumper reinforcement BR and extends rearward from the coupled portion.

As illustrated in FIG. 9B, in the case of assuming the offset collision of the vehicle V, a collision object (obstacle) 700 enters the powertrain room R1 as indicated by an arrow B1. In this case, a left portion of the bumper reinforcement BR is pushed rearward. Consequently, a part of the left front side frame SF is deformed by buckling or the like and thereby absorbs an impact force. In this case, the powertrain PT rotates leftward as indicated by an arrow B2 in the plan view from above.

As illustrated in FIG. 9B, in the case where the powertrain PT rotates as indicated by the arrow B2 due to the offset collision, the rear end portion 101a of the inverter housing 101 approaches the cabin R2 side.

Here, in a comparative example in which, unlike an embodiment, a rear end portion 901 of an inverter housing is not formed in a tapered shape, it is considered that a rear end portion 901a collides with the dashboard DP.

In contrast, in an embodiment, since the rear end portion 101a of the inverter housing 101 is formed in the tapered shape as described above, the collision of the rear end portion 101a with the dashboard DP is avoided.

### 7. Effects

The structure adopted for the powertrain PT of the vehicle V according to an embodiment has the ferrite core (noise filter component) 513 that is interposed in the DC bus bar (DC wire) LN4. Accordingly, noise generated in the inverter (power converter) is prevented from being leaked to the wire on the DC connector CN8 side from the portion of the DC bus bar LN4 inserted in the ferrite core 513 and on the battery 200 side from the DC connector CN8 (an EMI measure). In addition, even in the case where the noise is transmitted to the wire from the battery 200 to the DC connector CN8, interference of the noise with driving of the inverter 100 is prevented (an EMS measure).

In the structure adopted for the powertrain PT of the vehicle V, the DC bus bar LN4 is accommodated in the drive system housing 500 (more specifically, in the motor housing 510) that is formed of the conductive material. Accordingly, radiation of an electromagnetic wave from the inverter 100 side of the portion of the DC bus bar LN4 inserted through the ferrite core 513 to the outside of the drive system housing 500 is prevented, and the interference of the electromagnetic wave with the DC bus bar LN4 from the outside of the drive system housing 500 is also prevented. Thus, the EMC measures are taken against the powertrain structure of the vehicle V.

In the structure adopted for the powertrain PT of the vehicle V, the ferrite core 513 is not accommodated in the inverter housing 101, but the ferrite core 513 is accommodated in the drive system housing 500 that is closely joined to the inverter housing 101. Accordingly, in the structure adopted by the powertrain PT of the vehicle V, it is possible to downsize the inverter housing 101 by a space corresponding to the ferrite core 513, and it is thus possible to prevent the collision of the inverter housing 101 with the portion therearound during the vehicle collision.

In the structure adopted for the powertrain PT of the vehicle V according to an embodiment, since the DC bus bar LN4 is accommodated in the drive system housing 500 having relatively high rigidity, it is possible to suppress damage to the DC bus bar LN4 during the vehicle collision. Accordingly, in the structure adopted by the powertrain PT of the vehicle V, the DC bus bar LN4 can be protected at least until the power supply is interrupted even during the vehicle collision. Thus, it is possible to ensure high safety.

When it is assumed that the DC bus bar LN4 is disposed outside the drive system housing 500 as in the techniques disclosed in Patent Literature 1, 2, it is considered to secure a sufficient space to prevent the DC bus bar LN4 from being sandwiched between peripheral members or from strongly colliding with the peripheral member during the vehicle collision, and it is also considered to secure a space to provide a protector for protecting the DC bus bar LN4. Even when such a structure is adopted, it is considered to suppress the damage to the DC bus bar LN4 that is disposed on the outside of the drive system housing 500.

However, in the case where the structure in which the DC bus bar LN4 is disposed outside the drive system housing 500 as described above is adopted, it is considered to be difficult to improve a degree of freedom in arrangement of the powertrain PT or to make the vehicle V compact. To handle such a problem, in the structure adopted for the powertrain PT of the vehicle V according to an embodiment, since the DC bus bar LN4 is accommodated in the drive system housing 500, it is possible to narrow a space for ensuring the safety around the DC bus bar LN4, and it is thus possible to improve the degree of freedom in arrangement of the powertrain PT and to make the vehicle V compact.

As described above, "closely joined" indicates that, even in the case where a minute clearance is provided in the joined portion between the drive system housing 500 and the inverter housing 101, the electromagnetic wave does not enter/exit through the clearance.

In the structure adopted for the powertrain PT of the vehicle V according to an embodiment, since the rear end portion 101a of the inverter housing 101 is formed in the tapered shape as described above, the collision of the inverter housing 101 with the peripheral portion (such as the dashboard DP) is suppressed even during the vehicle collision (see FIG. 9). That is, during the vehicle collision (particularly, during the offset collision), there is a case where the inverter housing 101 rotate together with the drive system housing 500 in the plan view. In such a case, when the rear end portion 101a of the inverter housing 101 does not have the tapered shape as described above (the rear end portion 901a as the comparative example in FIG. 9B), there is a high risk that a corner portion of the rear end portion 901a collides with the peripheral member (such as the dashboard DP), and thus there is a concern that the inverter 100 is damaged.

Meanwhile, in the structure adopted for the powertrain PT of the vehicle V according to an embodiment, since the rear end portion 101a of the inverter housing 101 has the tapered shape, it is possible to reduce the risk that the rear end portion 101a of the inverter housing 101 collides with the peripheral member (such as the dashboard DP) even during the vehicle collision such as the offset collision. Thus, the structure adopted for the powertrain PT of the vehicle V is advantageous to ensure the high safety during the vehicle collision.

In the structure adopted for the powertrain PT of the vehicle V according to an embodiment, since the DC input/output unit 104 in the inverter 100 and the ferrite core 513 accommodated in the drive system housing 500 are provided in the overlapping positional relationship in the plan view from above, the inverter housing 101 is prevented from protruding from a contour of the drive system housing 500 in the plan view while the rear end portion 101a of the inverter housing 101 has the tapered shape as described above. Accordingly, in the structure adopted for the powertrain PT of the vehicle V, it is possible to suppress the inverter housing 101 from colliding with the peripheral member before the collision of the drive system housing 500 during the vehicle collision, and it is thus further advantageous to ensure the high safety during the vehicle collision.

In the structure adopted for the powertrain PT of the vehicle V according to an embodiment, the junction box JB is provided at the position between the portion of the DC bus bar LN4 inserted through the ferrite core 513 and the connection portion with the DC connector CN8, and the power line LN3 is branched by the junction box JB. Thus, the noise generated in the inverter 100 is prevented from being transmitted through the power line LN3. In addition, since the power line LN3 is also accommodated in the drive system housing 500, the electromagnetic wave from the outside of the housing 500 is also prevented from being transmitted through the power line LN3. Thus, the structure adopted for the powertrain PT of the vehicle V is advantageous to take the further reliable EMC measure.

The structure adopted for the powertrain PT of the vehicle V according to an embodiment is configured to slidingly move the drive system housing 500 (more specifically, the first motor housing 511) and the inverter housing 101 relative to each other in the horizontal direction and thereby join the DC connector (converter-side DC connector) CN3 to the DC connector (drive-system-side DC connector) CN6 and the AC connector (converter-side AC connector) CN4 to the AC connector (drive-system-side AC connector) CN7. Thus, the inverter housing 101 and the drive system housing 500 can easily be attached/detached at the time of manufacturing or maintaining the power unit PT.

In the structure adopted for the powertrain PT of the vehicle V according to an embodiment, as illustrated in FIG. 6A, the DC bus bar LN4 is routed to meander in the left-right direction when seen from the side. Accordingly, compared to a case of adopting a structure in which the DC bus bar LN4 is routed linearly from the upper side to the lower side and the ferrite core 513 is interposed in the intermediate portion thereof, it is possible to suppress a vertical dimension of a region where the DC bus bar LN4 is accommodated in the drive system housing 500. Thus, the structure adopted for the powertrain PT of the vehicle V is advantageous to reduce the size of the entire powertrain PT in the up-down direction.

In the structure adopted for the powertrain PT of the vehicle V according to an embodiment, the inverter housing 101 is fixed to the portion (axle housing 520) of the drive system housing 500, in which the transmission mechanism is accommodated, via the bracket 530. Accordingly, since the inverter housing 101 and the drive system housing 500 are slidingly moved, the inverter housing 101 and the drive system housing 500 are further firmly joined to each other not only by joining the connectors CN3, CN4, CN6, CN7 but also by fixing the inverter housing 101 and the drive system housing 500 via the bracket 530. Thus, it is possible to avoid occurrence of a situation in which the drive system housing 500 and the inverter housing 101 are separated from each other due to vibration during the vehicle travel, impact during the vehicle collision, or the like.

In the structure adopted for the powertrain PT of the vehicle V according to an embodiment, the powertrain PT is mounted in the powertrain room R1, which is provided in the front portion of the vehicle V, and the DC connector CN8 is disposed in the rear wall portion of the drive system housing 500. Accordingly, even during a frontal collision of the vehicle V, it is possible to suppress the DC connector CN8 from being damaged by the obstacle that enters the powertrain room R1, the member of the vehicle V that is pushed by the obstacle and moves rearward, or the like. Thus, the structure adopted for the powertrain PT of the vehicle V is further advantageous to ensure the high safety during the vehicle collision.

As it has been described so far, with the structure adopted for the powertrain PT of the vehicle V according to an embodiment, it is possible to establish the EMC measure and ensure the safety during the vehicle collision at the same time.

### [Modified Examples]

In an embodiment, such a configuration is adopted that the drive system housing 500 and the inverter housing 101 are separate members and are closely joined to each other. However, in the invention, it is also possible to adopt a configuration that the drive system housing 500 and the inverter housing are integrated. That is, in the invention, a configuration may be adopted that the converter housing is not provided separately from the drive system housing, that a part of the drive system housing has an outwardly bulging portion, and that components of the power converter are accommodated in the bulging portion. In this case, in the configuration of the power converter, it is not always necessary that the components are densely arranged in the housing inner space of the drive system housing, and the components may separately be arranged in the housing space.

In an embodiment, the inverter 100 is adopted as the example of the power converter. However, in the invention, a device other than the inverter may be adopted as the power converter. For example, a DC/DC converter may be adopted as the power converter.

In an embodiment, the ferrite core 513 is adopted as the example of the noise filter component. However, in the invention, it is also possible to adopt a noise filter component other than the ferrite core. For example, a choke coil, a Y capacitor, or the like may be adopted as the noise filter component.

In an embodiment, the wire is connected by joining the socket-type connectors CN1 to CN8. However, in an embodiment , it is not always necessary to connect the wire by using the socket-type connector. That is, in an embodiment, the connector only means a joint portion between the wire.

In an embodiment, the rear end portion 101a of the inverter housing 101 is formed in the tapered shape. However, in the invention, it is not always necessary to form the rear end portion of the converter housing in the tapered shape.

In an embodiment, such an arrangement configuration that satisfies the overlapping positional relationship between the DC input/output unit 104 of the inverter 100 and the ferrite core 513 in the plan view from above is adopted. For example, in the case where a sufficient space is secured in the drive system housing, the DC input/output unit and the noise filter component may be arranged in a misaligned positional relationship without overlapping each other in the plan view.

In an embodiment, the junction box JB in which the power line LN3 is branched is disposed in the drive system housing 500. However, in the invention, the junction box may be disposed outside the drive system housing.

In an embodiment, the connectors CN3, CN4, CN6, CN7 are joined by slidingly moving the inverter housing 101 and the drive system housing 500. For example, the conductive portions may be connected to each other by fastening the conductive portion formed on a terminal block to the other conductive portion by using a bolt or the like. In addition, the direction of the sliding movement does not always have to be the vehicle width direction, and may be the front-rear direction or an oblique direction (a direction oblique to the front-rear direction and the vehicle width direction) of the vehicle.

In an embodiment, the inverter housing 101 and the axle housing 520 are fixed via the bracket 530. For example, the connectors to be joined can be further screwed together, or the converter housing can be secured to the motor housing.

In an embodiment, the configuration that the powertrain room R1 is provided in the front portion of the vehicle V is adopted. However, in the invention, the powertrain room can also be provided in the rear portion of the vehicle. In this case, the DC connector, which is the connection portion with the battery, can be disposed in the front wall portion of the drive system housing. By disposing the DC connector just as described, it is possible to ensure the high safety during a rear-end collision.

In an embodiment, the electric compressor C of the air conditioner is adopted as the example of the auxiliary machine. For example, a refrigerant pump that circulates a refrigerant for cooling the powertrain PT can be adopted.

### [Reference Signs List]

100: inverter (power converter)
101: inverter housing (converter housing)
101a: rear end portion of housing
102: housing body
103: lid
200: battery
500: drive system housing
510: motor housing
510a: housing inner space
511: first motor housing
512: second motor housing
513: ferrite core (noise filter component)
520: axle housing
530: bracket
541: engine lower section
542: engine upper section
C: electric compressor (auxiliary machine)
CN8: DC connector
JB: junction box (branch portion)
LN2: AC wire
LN3: power line
LN4: DC bus bar (DC wire)
M: motor
PT: powertrain
V: vehicle
E: engine

## Claims

1. A vehicle powertrain structure comprising:
a drive system that has a motor as a drive source for travel of a vehicle and a drive system housing (500) formed by using a conductive and/or an electromagnetically shielding material and at least accommodating the motor;
a battery (200) as a power source of the motor; and
a power converter (100) that has a circuit section interposed between the motor and the battery (200) and converting power between the motor and the battery (200) and a converter housing (101) formed by using a conductive and/or electromagnetically shielding material suppressing electromagnetic noise and accommodating the circuit section, wherein
the converter housing (101) is closely joined to the drive system housing (500) or integrally provided with the drive system housing (500), and
in the drive system housing (500), a DC connector, to which a wire extending from the battery (200) is connected, is disposed on or in a wall portion, and a DC wire for connecting the circuit section of the power converter (100) and the DC connector and a noise filter component (513) inserted in the DC wire are accommodated.

2. The vehicle powertrain structure according to claim 1, wherein the converter housing (101) is placed on at least a part of an upper portion of the drive system housing (500), and is formed in a tapered shape in a plan view from above such that a width of a rear end portion (101a) from an outer side to an inner side in a vehicle width direction is reduced from a front side toward a rear side.

3. The vehicle powertrain structure according to claim 1 or claim 2, wherein the drive system housing (500) comprises a motor housing (510) including a first motor housing (511) and a second motor housing (512), which includes an upright leg portion and a laying leg portion positioned on neighbouring sides of the drive system, wherein the upright leg portion is on a rearside of the drive system.

4. The vehicle powertrain structure according to claim 3, wherein the first motor housing (511) and the second motor housing (512) are each formed by using a conductive and/or electromagnetically shielding material such as a metallic material or a carbon fiber reinforced resin.

5. The vehicle powertrain structure according to any one of claims 1-4, wherein the converter housing (101) is configured by combining a housing body (102) and a lid (103), wherein the housing body (102) has an opening in an upper portion thereof, and the lid (103) closes the opening of the housing body (102).

6. The vehicle powertrain structure of claim 5, wherein housing body (102) and the lid (103) are each formed by using the conductive material as a metallic material or a carbon fiber reinforced resin.

7. The vehicle powertrain structure according to any one of claims 1 to 6, wherein
in a plan view from above, a DC input/output unit, which is a connection portion of the power converter (100) with the DC wire, and the noise filter component (513) are disposed in an overlapping positional relationship.

8. The vehicle powertrain structure according to any one of claims 1 to 7, wherein
a power line for supplying DC power to an auxiliary machine is accommodated in the drive system housing (500), and
in the drive system housing (500), a branch portion (JB) in which the power line (LN3) is branched on the DC connector (CN8) side from a position at which the noise filter component (513) is inserted in the DC wire is provided.

9. The vehicle powertrain structure according to any one of claims 1-8, wherein the noise filter component (513) is a ferrite core.

10. The vehicle powertrain structure according to any one of claims 1 to 9 , wherein
the drive system housing (500) accommodates an AC wire (LN2) that connects the circuit section of the power converter (100) and the motor,
a drive-system-side DC connector and a drive-system-side AC connector are disposed in or on the wall portion of the drive system housing (500), the drive-system-side DC connector being a connection portion of the DC wire with the circuit section, and the drive-system-side AC connector being a connection portion of the AC wire with the circuit section,
a converter-side DC connector and a converter-side AC connector are disposed in or on a wall portion of the converter housing (101), the converter-side DC connector being a connection portion of the circuit section with the DC wire, and the converter-side AC connector being a connection portion of the circuit section with the AC wire, and
the drive-system-side DC connector and the converter-side DC connector are joined and the drive-system-side AC connector and the converter-side AC connector are joined by slidingly moving the power converter (100) relative to the drive system in a sliding direction.

11. The vehicle powertrain structure according to claim 10, wherein
when the DC wire (LN4) is seen in a direction intersecting both an up-down direction and said sliding direction of the sliding movement, the DC wire is routed to meander in the direction of the sliding movement.

12. The vehicle powertrain structure according to any one of claims 1-11, wherein
the drive system further has a transmission that is coupled to an output shaft of the motor,
the drive system housing (500) is configured to also accommodate the transmission, and
the converter housing (101) is fixed to a portion of the drive system housing (500), in which the transmission is accommodated, via a bracket (530).

13. The vehicle powertrain structure according to any one of claims 1-12,
wherein the drive system further has an engine E,the engine E has an engine lower section (541) and an engine upper portion (542) that is disposed on top of the engine lower portion (541),
the engine lower portion (541) is disposed on a right side and adjacent to the motor.

14. A vehicle comprising a vehicle power train structure as defined in any of the preceding claims.

15. The vehicle of claim 14, wherein
the drive system and the power converter (100) are mounted in a powertrain room that is provided in a front portion of the vehicle,
the battery (200) is mounted in a portion of the vehicle on a rear side of the powertrain room, and
the DC connector is disposed on or in the wall portion on a rear side of the drive system housing.
